# EUROPÄISCHE PATENTSCHRIFT

(11) **EP 0 589 444 B1**
(45) Veröffentlichungstag und Bekanntmachung des Hinweises auf die Patenterteilung: **21.01.1998**
(21) Anmeldenummer: 93115325.8
(22) Anmeldetag: 23.09.1993
(51) Int. Cl.: B29B 17/00, B29K 25/00, B29K 105/04

(54) **Verfahren und Vorrichtung zum Konditionieren von wiederverwertbarem Kunststoffmaterial**
Process and apparatus conditioning reusable plastic material
Procédé et appareil pour le conditionnement d'un matériau plastique réutilisable

(30) Priorität: 24.09.1992 DE 4231971; 28.10.1992 DE 4236344
(43) Veröffentlichungstag der Anmeldung: 30.03.1994
(73) Patentinhaber: ERLENBACH GMBH & CO. KG, D-56335 Lautert (DE)
(72) Erfinder: Erlenbach, Hans, D-56355 Nastätten (DE)
(74) Vertreter: Fuchs Mehler Weiss

(56) Entgegenhaltungen:
- US-A- 3 023 175
- US-A- 3 344 212
- US-A- 3 531 562
- DATABASE WPI Week 8039, Derwent Publications Ltd., London, GB; AN 80-68607C & JP-A-55 105 528 (MATSUSHITA ELEC. IND.) 14. August 1980
- DATABASE WPI Week 9003, Derwent Publications Ltd., London, GB; AN 90-017559 & JP-A-1 295 804 (FUJI ELECTRIC MFG.) 29. November 1989

## Beschreibung

Die Erfindung betrifft ein Verfahren zum Konditionieren, insbesondere zur Erhöhung der Schüttdichte, von wiederverwertbarem Kunststoffmaterial, insbesondere von expandierbarem Polystyrol, bei dem das Material zunächst auf eine für das spätere Endprodukt geeignete Teilchengröße gemahlen wird. Die Erfindung betrifft auch eine Vorrichtung zum Konditionieren von wiederverwertbarem Kunststoffmaterial gemäß dem Oberbegriff von Patentanspruch 12.

Es ist an sich bekannt, gebrauchte EPS (expandierbares Polystyrol) -Formteile, -Platten oder -Blöcke dadurch einer Wiederverwertung zuzuführen, daß man die anfallenden Teile zunächst grob zerkleinert, danach zu Partikeln mit einer Größe von wenigen Millimetern vermahlt, das so gewonnene Regenerat entstaubt und in einer mehr oder minder konzentrierten Mischung mit EPS-Neumaterial bei der Herstellung neuer EPS-Formteile, -Platten oder -Blöcke verwendet.

Insbesondere bei der Herstellung von EPS-Formteilen haften dieser an sich bekannten Vorgehensweise jedoch mehrere Nachteile an.

So weist das durch grobes Vorzerkleinern und anschließendes Mahlen gewonnene EPS-Regenerat wegen seiner unregelmäßig geformten Partikeloberflächen Schüttdichten auf, die im allgemeinen wesentlich geringer sind als die Raumgewichte des Ausgangsmaterials, aus dem das Regenerat gewonnen wurde. Hinzu kommt, daß die Schüttdichten des Regeneratmaterials je nach Art der zerkleinerten Formteile großen Schwankungen unterliegen.

Aus Neumaterial mit einer Schüttdichte von beispielsweise 20 g/l hergestellte Formteile werden bei druckloser Füllung der Form ein Raumgewicht von annähernd ebenfalls 20 g/l aufweisen. Zerkleinert man diese Formteile und arbeitet sie durch Mahlen zu Regenerat auf, so erhält man Schüttdichten von nur noch beispielsweise 12 bis 13 g/l. Dieses Material läßt sich zwar problemlos mit Neumaterial von beispielsweise 20 g/l Schüttdichte homogen mischen, jedoch treten bei einer pneumatischen Förderung dieser Mischung, insbesondere beim Einfüllen in und Entleeren aus Großsilos mit mehreren Kubikmetern Rauminhalt Entmischungseffekte auf.

Diese Entmischungen haben ihre Ursache einerseits in den geschilderten Dichteunterschieden, zum andern aber auch in dem gegenüber Neumaterial wesentlich erhöhten Luftwiderstand, den die unregelmäßig geformten Regeneratteilchen einer pneumatischen Förderung entgegensetzen.

Dies führt dazu, daß beim späteren Herstellungsprozeß die Regeneratpartikel im Formteil nicht mehr wie gewünscht gleichmäßig verteilt sind, sondern sich an den unterschiedlichsten Stellen zusammenballen. Hierdurch wird die Qualität der Formteile, inbesondere ihre mechanischen Eigenschaften wie Druck-, Biege- und Zugfestigkeit, stark beeinträchtigt.

Ein weiterer Nachteil besteht darin, daß die unbehandelten Regeneratpartikel unabhängig von einem ausfilterbaren Staubanteil an ihrer Oberfläche mikrofeine faserförmige Enden aufweisen, die sich beim Aufschäumprozeß in den Loch- oder Schlitzdüsen der Form festsetzen und diese verstopfen. Erfahrungsgemäß müssen verdüste Formen, in denen Mischungen aus Regenerat und Neumaterial ausgeschäumt werden, bis zu einmal pro Woche gereinigt werden, was mit einem hohen Zeit- und Kostenaufwand verbunden ist.

Verfahren zum Verdichten von EPS-Regeneratpartikeln allein durch Temperaturerhöhung bis nahe an oder über die Schmelztemperatur des Granulats sind an sich bekannt. Diese so konditionierten Partikel weisen eine verhärtete, meist bräunlich verfärbte Oberfläche auf und sind nicht mehr schäumfähig. Sie finden Verwendung als Zuschlagstoffe bei Leichtzement oder Leichtmörtel.

Aus der DE 33 23 846 A1 ist weiterhin ein Verfahren und eine Vorrichtung zum Wiederverdichten von Thermoplast-Harzschäumen bekannt, wobei das wiederverdichtete Material wegen seiner hohen Dichte nicht unmittelbar für die Herstellung neuer Formteile eingesetzt werden kann. Es wird nämlich eine Hochverdichtung beschrieben, mit der Dichten bis zu 175 g/l erzielt werden können.
Dementsprechend werden während des Verdichtungsprozesses z.T. Temperaturen angewendet, die weit über der Schmelztemperatur des Materials liegen und die lediglich dadurch begrenzt sind, daß ein Anhaften der Teilchen auf den Schwingplatten noch vermieden wird.

Die US-A-35 31 562 beschreibt ein Verfahren, das zum Ziel hat, die Dichte von thermoplastischen Abfallteilchen zu erhöhen. Es ist daher vorgesehen, daß die Zellstruktur vernichtet wird, wobei das noch in den Partikeln vorhandene Schäummittel entfernt wird. Die Schäumfähigkeit der Partikel ist damit nach der Behandlung nicht mehr gegeben. Das Verfahren sieht vor, daß das Abfallmaterial über eine Schnecke zwei runden Scheiben zugeführt wird, die beheizt sind und von denen nur eine rotiert. Im Zwischenraum zwischen diesen Scheiben sind die Partikel einer Scherung unterworfen, wobei die Struktur der Partikel bzw. der Zellen zerstört wird. Gleichzeitig werden strangförmige Teilchen erzeugt, die an der Peripherie der Scheiben mittels eines Messers wieder kleingeschnitten werden müssen.

Das in US-A-33 44 212 beschriebene Verfahren setzt eine Beschichtung der zu behandelnden Partikel voraus, weil anderenfalls bei der nachfolgenden Wärmebehandlung die Teilchen verklumpen würden. Auch dieses Verfahren sieht eine Erhöhung der Dichte der Partikel vor. Dementsprechend werden die Wände der Partikel bei diesem vorbekannten Verfahren aufgeschmolzen, so daß die homogene Struktur der Partikel zerstört wird. Die Partikel werden durch ein inertes heißes Gas erhitzt und nicht durch Reibungswärme.

Aufgabe der Erfindung ist daher ein Verfahren und eine Vorrichtung, mit dem die Schüttdichte der wiederverwertbaren Kunststoffteilchen homogenisiert und auf einen gewünschten Wert erhöht werden kann und mit dem die Oberfläche der Kunststoffteilchen von störendem faserförmigem Material befreit wird, so daß das Material problemlos allein oder in Verbindung mit Neumaterial zum Schäumen von Formteilen verwendet werden kann.

Diese Aufgabe wird mit den Merkmalen der Ansprüche 1 und 12 gelöst. Vorteilhafte Ausgestaltungen sind Gegenstand der Unteransprüche.

Es hat sich überraschend herausgestellt, daß eine Rundung von Regeneratpartikeln unter Erhalt ihrer Schäumfähigkeit in einem wesentlich niedrigeren Temperaturbereich als beim Stand der Technik erreicht werden kann, wenn man die Teilchen gleichzeitig einer mechanisch-thermischen Rundungsbehandlung in der Art eines Rührvorgangs unterzieht, wobei die erforderlichen Temperaturen durch Reibung erzeugt werden. Die Kunststoffteilchen stehen unter dem Einfluß einer durch Reibung und durch mehrmaligen Kontakt mit erwärmten Oberflächen entstehenden Temperaturerhöhung.

Der mehrmalige Kontakt der Kunststoffteilchen erfolgt vorzugsweise mit Oberflächen, die eine Temperatur aufweisen, die unterhalb der Schmelztemperatur der Kunststoffteilchen liegt. Vorzugsweise liegt die Temperatur der Oberflächen mindestens im Bereich der Erweichungstemperatur aber mindestens ca. 30°C unterhalb der Schmelztemperatur der Kunststoffteilchen. Die Temperaturführung ist von besonderer Bedeutung, da eine Materialschädigung vermieden werden muß, um die Schäumfahigkeit der Teilchen zu erhalten.

Bei der Konditionierung von Polystyrolteilchen hat sich als bevorzugter Temperaturbereich der Kontaktoberflächen ein Bereich von 70 bis 130°C, insbesondere 90 bis 110°C herausgestellt. Bei Temperaturen oberhalb von 150°C tritt eine Schädigung der Polystyrolteilchen auf, die vermieden werden muß.

Beim Kontakt mit den Oberflächen muß darauf geachtet werden, daß die Teilchen lediglich in einem Oberflächenbereich erwärmt werden. Dies bedeutet, daß die Kontaktzeit mit der Oberfläche entsprechend kurz gehalten werden muß. Bei der Rundungsbehandlung ist es von Vorteil, wenn beim Kontakt mit den erwärmten Oberflächen gleichzeitig ein Abrollen der Kunststoffteilchen erfolgt. Hierbei kann es von Vorteil sein, wenn den Teilchen bereits vor dem Auftreffen auf die Oberflächen eine gewisse Drehung erteilt wird, so daß beim Auftreffen aufgrund des Abrolleffektes ein möglichst großer Teil der Oberfläche der Partikel erwärmt wird. Durch das Abrollen auf den erwärmten Oberflächen werden auch die mikrofeinen, vorstehenden Fasern so weit erwärmt und mechanisch umgebogen, daß sie nicht mehr an der Oberfläche der Kunststoffteilchen vorstehen.

Der Rundungseffekt kann dadurch noch gesteigert werden, daß die Kunststoffteilchen nicht nur erwärmte Oberflächen kontaktieren, sondern auch eine kältere Oberfläche, worunter eine Oberfläche mit ca. 50°C oder weniger zu verstehen ist. Durch das Kontaktieren auf einer kälteren Oberfläche und einem Abrollen auf dieser Oberfläche wird die Rundungsverformung der Kunststoffteilchen fixiert.

Da eine gewünschte Schüttdichte, die der des Neumaterials angepaßt sein soll, angestrebt wird, empfiehlt es sich, die konditionierten Kunststoffteilchen einer Schüttdichtemessung zu unterziehen, die kontinuierlich oder diskontinuierlich erfolgen kann. Die Konditionierparameter, wie Temperatur der Oberfläche, Geschwindigkeit der Teilchen und Häufigkeit der Kontakte, können in Abhängigkeit der ermittelten Schüttdichte gesteuert werden.

Die Rundungsbehandlung kann kontinuierlich durchgeführt werden, das heißt, es wird kontinuierlich Regeneratmaterial zugeführt und kontinuierlich das konditionierte Material aus einem Konditionierbehälter entnommen. Es besteht auch die Möglichkeit, eine vorgegebene Menge von unkonditioniertem Material in einen Konditionierbehälter einzufüllen, die Rundungsbehandlung der Kunststoffteilchen durchzuführen und anschließend das konditionierte Material zu entnehmen.

Die erfindungsgemäße Vorrichtung ist gekennzeichnet durch einen mit einer Temperiereinrichtung versehenen Konditionierbehälter. Der Konditionierbehälter ist zylindrisch und geschlossen sowie mit einer Zuführöffnung und einer Auslaßöffnung versehen und weist in seinem Inneren ortsfeste und bewegte Teile auf, wobei die bewegten Teile derart ausgebildet und angeordnet sind, daß das Kunststoffmaterial auf dem Weg zur Auslaßöffnung zumindest die ortsfesten Teile sowie die zylindrische Konditionierbehälterwand kontaktieren muß.

Vorzugsweise bestehen die ortsfesten und die bewegten Teile aus parallel zur Zylinderachse des Konditionierbehälters angeordneten Bolzen, wobei die bewegten Bolzen auf einer rotierenden Scheibe und die ortsfesten Bolzen auf der der Scheibe gegenüberliegenden Seitenwand des Konditionierbehälters angeordnet sind. Die Bolzen sind vorzugsweise auf konzentrischen Kreisen angeordnet, wobei mindestens ein ortsfester und mindestens ein bewegter Bolzenkranz gebildet wird. Hierbei hat es sich als vorteilhaft herausgestellt, wenn die ortsfesten und die bewegten Bolzenkränze alternierend angeordnet sind.

Damit möglichst alle im Konditionierbehälter befindlichen Kunststoffteilchen in gleicher Weise an der Rundungsbehandlung teilnehmen, erstrecken sich die Bolzen über mindestens die halbe Konditionierbehälterlänge.

Die Zuführöffnung des Konditionierbehälters befindet sich vorzugsweise im Bereich der Zylinderachse des Konditionierbehälters, die auch gleichzeitig Rotationsachse der Scheibe ist. Aufgrund der Rotation der mit Bolzen versehenen Scheibe werden die axial zugeführten Kunststoffteilchen auf eine spiralförmige Bahn gezwungen.

Für bestimmte Anwendungszwecke ist es vorteilhaft, wenn während der Rundungsbehandlung ein Fluid in das Innere des Konditionierbehälters zur Beschichtung oder Behandlung der Regeneratteilchen zugeführt wird. Um beispielsweise eine elektrische Aufladung der Regeneratteilchen zu verhindern, wird vorzugsweise Dampf in das Innere des Konditionierbehälters eingeleitet. Das Füllen von Formen kann dadurch erleichtert werden, daß die Regeneratteilchen eine entsprechende Beschichtung aufweisen. Auf dem Baustoffsektor werden Formteile eingesetzt, die schwer entflammbar sein müssen. Auch hierzu müssen den Kunststoffteilchen entsprechende Materialien zugegeben werden. Zu diesem Zweck ist mindestens einer der ortsfesten Bolzen als Hohlbolzen mit mindestens einer Düse zum Zuführen eines geeigneten Fluids ausgebildet. Es ist auch möglich, alle ortsfesten Bolzen mit Düsen auszustatten, die vorzugsweise auf der Mantelfläche der Bolzen verteilt sind.

Die Auslaßöffnung, die vorzugsweise unten am Konditionierbehälter in der zylindrischen Konditionierbehälterwand angebracht ist, weist vorzugsweise eine drehzahlregelbare Auslaßschleuse auf, die von einer Steuer- und Regeleinrichtung angesteuert wird. Der Füllgrad des Konditionierbehälters kann somit durch die Auslaßschleuse gesteuert werden, was einen unmittelbaren Einfluß auf die Schüttdichte der konditionierten Regeneratteilchen hat. Je länger die Regeneratteilchen im Konditionierbehälter verbleiben, desto kleiner werden die Regeneratteilchen, wodurch sich die Schüttdichte entsprechend erhöht. Da die konditionierten Regeneratteilchen eine vorgegebene Schüttdichte aufweisen sollen und auch die Schüttdichte des jeweils zugeführten Regeneratmaterials sich u.U. ständig ändert, ist der Auslaßöffnung des Konditionierbehälters eine Dichtemesseinrichtung nachgeordnet, die laufend die Schüttdichte des konditionierten Materials ermittelt. Die Dichtemeßeinrichtung ist ebenfalls an die Steuer- und Regeleinrichtung angeschlossen, die in Abhängigkeit der ermittelten Schüttdichtewerte des konditionierten Materials die Auslaßschleuse so steuert, daß Abweichungen von der gewünschten Schüttdichte korrigiert werden können.

Da die Temperatur einen wesentlichen Einfluß auf die Rundungsbehandlung hat, muß die Temperatur der Regeneratteilchen im Konditionierbehälter überwacht werden. Dies geschieht indirekt durch mindestens einen Temperaturfühler, der an einer Wand des Konditionierbehälters angeordnet ist. Mindestens ein weiterer Temperaturfühler kann an einem ortsfesten Bolzen angeordnet sein.

Für die Konditionierung von EPS-Material ist es vorteilhaft, wenn die Temperatur der Wand des Konditionierbehälters bei ca. 50°C liegt (48 - 52°C). Die Prozeßtemperatur liegt hingegen bei 80 - 100°C, worunter die Teilchentemperatur im Inneren des Konditionierbehälters zu verstehen ist. Im Betrieb muß aufgrund der Reibungswärme, die im wesentlichen durch die Bewegung der Bolzen durch die Masse der Regeneratteilchen entsteht, die Konditionierbehälterwand auf die vorgegebene Temperatur gekühlt werden. Der Temperaturfühler ist daher ebenfalls an die Steuer- und Regeleinrichtung angeschlossen, die einerseits mit der Temperiereinrichtung (Kühleinrichtung) und andererseits mit dem Antrieb einer an der Auslaßöffnung angeschlossenen Schließeinrichtung, z.B. der Auslaßschleuse, verbunden ist. Während der Rundungsbehandlung ist darauf zu achten, daß die Temperatur nicht über eine Temperatur ansteigt, die eine Schädigung des Kunststoffmaterials verursacht.

Die Temperaturregelung des zu konditionierenden Kunststoffmaterials ist in der Regel bei grobkörnigem Material unkritisch. Bei feinkörnigem Material hingegen ist die Einhaltung einer vorgegebenen Temperatur weitaus wichtiger, weil ein Zusammenbacken des Materials und somit Störungen des Verfahrensablaufs auftreten können. Wenn die Manteltemperatur einen vorgegebenen maximalen Wert erreicht, steuert die Steuer- und Regeleinrichtung den Stellantrieb beispielsweise der Auslaßschleuse in der Weise an, daß mehr konditioniertes Material ausgetragen wird, oder die Einlaßdosierung wird vermindert, so daß sich die Menge an Kunststoffmaterial im Konditionierbehälter verringert. Die Verringerung der im Konditionierbehälter befindlichen Kunststoffteilchen führt nicht nur zu einer Absenkung der Temperatur im Inneren des Konditionierbehälters, sondern auch der Temperatur an der Behälterwand. Hierbei wird bewußt in Kauf genommen, daß kurzzeitig die austretenden Regeneratteilchen nicht die gewünschte Schüttdichte aufweisen.

Zusätzlich ist auch der Antrieb der rotierenden Scheibe an die Steuer- und Regeleinrichtung angeschlossen. Wenn zu viele Regeneratteilchen in den Konditionierbehälter eingeführt werden, sinkt die Drehzahl des Antriebsmotors der rotierenden Scheibe ab. Um eine Überlastung des Antriebsmotors zu verhindern, wird durch die Überwachung der Drehzahl oder des aufgenommenen Stroms der Antrieb der Auslaßschleuse so angesteuert, daß mehr Regeneratteilchen aus dem Konditionierbehälter austreten können. In diesem Fall wird auch der Antrieb der Zuführ- und Fördereinrichtung, die z.B. aus einer Dosiereinrichtung oder einer Zellenradschleuse bestehen kann, von der Steuer- und Regeleinrichtung in der Weise angesteuert, daß die Zuführung von Regeneratmaterial zum Konditionierbehälter gedrosselt wird, bis der Füllgrad des Konditionierbehälters sich wieder auf den gewünschten Wert eingestellt hat.

Wenn an der Auslaßöffnung des Konditionierbehälters eine Schließeinrichtung mit einem Schieber vorgesehen ist, ist die Auslaßöffnung an der Außenseite des Konditionierbehälters vorzugsweise mit einem Auslaufblech versehen, das entgegen der Rotationsrichtung ausgerichtet ist. Diese Anordnung des Auslaufbleches hat den Vorteil, daß die austretenden Regeneratteilchen die Auslaßöffnung nicht verstopfen können. Bei dieser Ausführung ist der Stellantrieb des Schiebers ebenfalls an die Steuer- und Regeleinrichtung angeschlossen.

Vorteilhafte Ausgestaltungen der erfindungsgemäßen Vorrichtung werden nachfolgend anhand der Zeichnungen näher erläutert.

Es zeigen:
- Figur 1: einen Vertikalschnitt durch eine Konditioniereinrichtung und
- Figur 2: die Konditioniervorrichtung in Seitenansicht sowie teilweise im Schnitt.

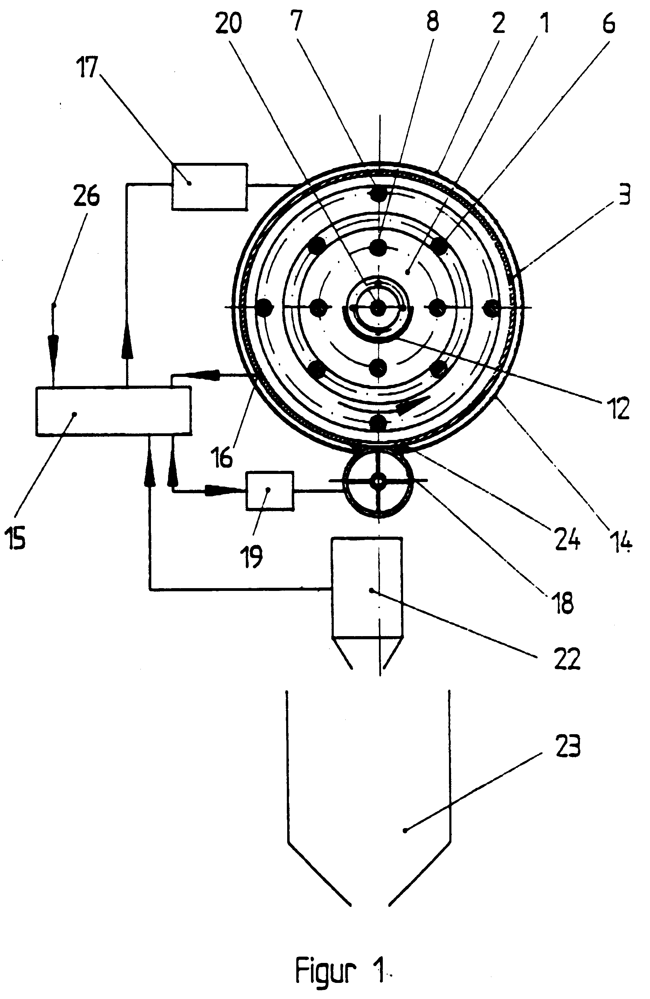

In der Figur 1 ist eine Konditioniervorrichtung 1 dargestellt, die einen geschlossenen Konditionierbehälter 2 mit einer zylindrischen Behälterwand 3 aufweist. Der Konditionierbehälter 2 ist von einem Außenmantel 14 umgeben, so daß die Konditionierbehälterwand 3 von einem Temperiermedium umspült werden kann.

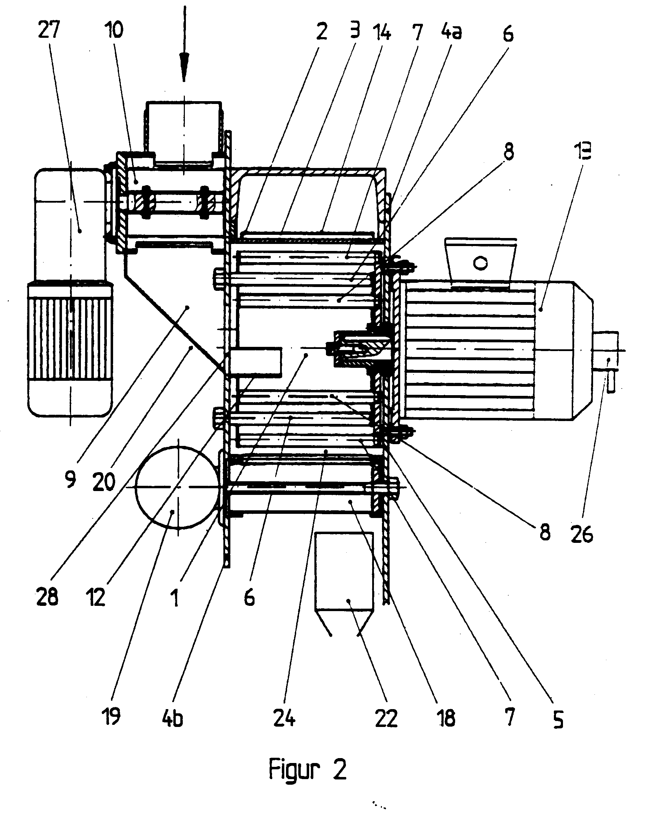

Im Inneren des Konditionierbehälters 2 sind feststehende Bolzen 6 und bewegte Bolzen 7, 8 auf konzentrischen Kreisen angeordnet. Die bewegten Bolzen 7, 8 sind auf einer rotierenden Scheibe 5 und die ortsfesten Bolzen 6 an einer Konditionierbehälterseitenwand 4b (s. Figur 2) befestigt. In der hier gezeigten Darstellung sind auf der rotierenden Scheibe 5 zwei Bolzenkränze angeordnet, zwischen denen ein feststehender aus vier Bolzen 6 bestehender Bolzenkranz angeordnet ist. Die Rotationsrichtung der Scheibe 5 ist durch den Pfeil angedeutet.

An der Konditionierbehälterwand 3 ist ein Temperaturfühler 16 vorgesehen, der an eine Steuer- und und Regeleinrichtung 15 angeschlossen sind. Die Steuer- und Regeleinrichtung 15 ist mit der Temperiereinrichtung 17 verbunden.

An der Unterseite des Konditionierbehälters 2 ist an der Auslaßöffnung 24 eine Auslaßschleuse 18 angeordnet, die mittels eines Schleusenantriebs 19 angetrieben wird. Der Schleusenantrieb 19 ist ebenfalls an die Steuer- und Regeleinrichtung 15 angeschlossen. Der Auslaßschleuse ist eine Dichtemesseinrichtung 22 nachgeordnet, die ebenfalls an die Steuer- und Regeleinrichtung 15 angeschlossen ist. In einem Silo 23 wird das konditionierte Kunststoffmaterial gesammelt.

In der Figur 2 ist die in Figur 1 gezeigte Konditioniervorrichtung in Seitenansicht sowie teilweise im Schnitt dargestellt. Die Zuführöffnung 28 befindet sich im Bereich der Zylinderachse 20 und ist über einen schräg ausgebildeten Zuführkanal 9 mit einer Zuführ- und Fördereinrichtung verbunden. Die Zuführ- und Fördereinrichtung ist beispielsweise durch eine Einlaßschleuse 10 mit regelbarem Antrieb 27 ausgebildet. Das zugeführte Kunststoffmaterial gelangt durch die Zuführöffnung 28 in das Innere des Konditionierbehälters 2, wo ein gebogenes Führungsblech 12 vorgesehen ist, das sich parallel zur Zylinderachse 20 erstreckt und ein Nachuntenfallen des Regeneratmaterial verhindert. Dadurch soll sichergestellt werden, daß die Regeneratteilchen nicht vorzeitig zur Auslaßöffnung gelangen, sondern aufgrund der Rotation der Scheibe 5 und der Bolzen 7, 8 auf eine spiralförmige Umlaufbahn gebracht werden. Die Bolzen 6, 7 und 8 erstrecken sich nahezu über die gesamte Länge des Konditionierbehälters 2, so daß alle im Konditionierbehälter 2 befindlichen Regeneratteilchen an der Rundungsbehandlung teilnehmen. Die Einlaßschleuse 10 ist an die Steuer- und und Regeleinrichtung 15 angeschlossen. Der Antriebsmotor, der an der Behälterwand 4a befestigt ist, ist über den Drehzahlgeber 26 ebenfalls an die Steuer- und Regeleinrichtung 15 angeschlossen (s. auch Figur 1).

### Bezugszeichen:

- 1: Konditioniervorrichtung
- 2: Konditionierbehälter
- 3: zylindrische Behälterwand
- 4a, b: Behälterseitenwände
- 5: rotierende Scheibe
- 6: feststehende Bolzen
- 7: bewegte Bolzen
- 8: bewegte Bolzen
- 9: Zuführkanal
- 10: Einlaßschleuse
- 12: Führungsblech
- 13: Antriebsmotor
- 14: Außenmantel
- 15: Steuer- und Regeleinrichtung
- 16: Temperaturfühler
- 17: Temperiereinrichtung
- 18: Auslaßschleuße
- 19: Schleusenantrieb
- 20: Zylinderachse
- 22: Dichtemeßeinrichtung
- 23: Silo
- 24: Auslaßöffnung
- 26: Drehzahlgeber
- 27: Antrieb
- 28: Zuführöffnung

## Patentansprüche

1. Verfahren zum Konditionieren, insbesondere zur Erhöhung der Schüttdichte, von wiederverwertbarem Kunststoffmaterial, insbesondere von expandierbarem Polystyrol, bei dem das Material zunächst auf eine für das spätere Endprodukt geeignete Teilchengröße gemahlen wird, dadurch gekennzeichnet,
daß die gemahlenen Kunststoffteilchen einer mechanisch-thermischen Rundungsbehandlung in der Art eines Rührvorgangs unterworfen werden, wobei die Kunststoffteilchen unter dem Einfluß einer durch Reibung und durch mehrmaligen Kontakt mit erwärmten Oberflächen entstehenden Temperaturerhöhung stehen.

2. Verfahren nach Anspruch 1, dadurch gekennzeichnet, daß der mehrmalige Kontakt der Kunststoffteilchen mit Oberflächen erfolgt, die eine Temperatur aufweisen, die unterhalb der Schmelztemperatur der Kunststoffteilchen liegt.

3. Verfahren nach Anspruch 2, dadurch gekennzeichnet, daß die Kunststoffteilchen Oberflächen kontaktieren, deren Temperaturen mindestens im Bereich der Erweichungstemperatur, aber mindestens ca. 30°C unterhalb der Schmelztemperatur liegen.

4. Verfahren nach einem der Ansprüche 1 bis 3 zur Konditionierung von Polystyrolmaterial, dadurch gekennzeichnet, daß die Polystyrolteilchen Oberflächen mit Temperaturen von 70 bis 130°C, vorzugsweise 90 bis 110°C, kontaktieren.

5. Verfahren nach einem der Ansprüche 1 bis 4, dadurch gekennzeichnet, daß die Kunststoffteilchen während der Rundungsbehandlung zusätzlich Kontakt mit einer Oberfläche haben, deren Temperatur im Bereich von 40 - 60°C liegt.

6. Verfahren nach einem der Ansprüche 1 bis 5, dadurch gekennzeichnet, daß die Kunststoffteilchen während der Rundungsbehandlung in Drehung versetzt werden.

7. Verfahren nach einem der Ansprüche 1 bis 6, dadurch gekennzeichnet, daß die Geschwindigkeit der Teilchen und die Temperatur der Oberfläche derart gewählt werden, daß ein Anhaften der Kunststoffteilchen an der erwärmten Oberfläche vermieden wird.

8. Verfahren nach einem der Ansprüche 1 bis 7, dadurch gekennzeichnet, daß die Rundungsbehandlung unter kontinuierlicher Zufuhr von unkonditioniertem Material und kontinuierlicher Entnahme von konditioniertem Material durchgeführt wird.

9. Verfahren nach einem der Ansprüche 1 bis 7, dadurch gekennzeichnet,
daß eine vorgegebene Menge von unkonditioniertem Material in einen Konditionierbehälter eingefüllt wird,
daß die Rundungsbehandlung der Kunststoffteilchen durchgeführt wird und
daß anschließend das konditionierte Material entnommen wird.

10. Verfahren nach einem der Ansprüche 1 bis 9, dadurch gekennzeichnet, daß die konditionierten Kunststoffteilchen einer kontinuierlichen oder diskontinuierlichen Schüttdichtemessung unterzogen werden.

11. Verfahren nach Anspruch 10, dadurch gekennzeichnet, daß die Konditionierparameter in Abhängigkeit der ermittelten Schüttdichte und/oder Belastung des Antriebsmotors der Konditioniervorrichtung gesteuert werden.

12. Vorrichtung zum Konditionieren von wiederverwertbarem, gemahlenem Kunststoffmaterial, insbesondere von expandierbarem Polystyrol, mit einem zylindrischen, geschlossenen Konditionierbehälter (2) mit einer Zuführöffnung (28) und einer Auslaßöffnung (24), der in seinem Inneren ortsfeste und bewegte Teile aufweist, wobei die bewegten Teil (7, 8) derart ausgebildet und angeordnet sind, daß das Kunststoffmaterial auf dem Weg zur Auslaßöffnung zumindest die ortsfesten Teile (6) sowie die zylindrische Konditionierbehälterwand (3) kontaktiert, dadurch gekennzeichnet, daß der Konditionierbehälter (2) mit einer Temperiereinrichtung (17) versehen ist.

13. Vorrichtung nach Anspruch 12, dadurch gekennzeichnet, daß die ortsfesten und die bewegten Teile parallel zur Zylinderachse (20) angeordnete Bolzen (6, 7, 8) sind, wobei die
bewegten Bolzen (7, 8) auf einer rotierenden Scheibe (5) und die ortsfesten Bolzen (6) auf der der Scheibe (5) gegenüberliegenden Seitenwand (4b) des Konditionierbehälters (2) angeordnet sind.

14. Vorrichtung nach Anspruch 12 oder 13, dadurch gekennzeichnet, daß mindestens ein ortsfester und mindestens ein bewegter Bolzenkranz vorgesehen sind.

15. Vorrichtung nach einem der Ansprüche 12 bis 14, dadurch gekennzeichnet, daß die Bolzen (6, 7, 8) sich über mindestens die halbe Länge des Konditionierbehälters (2) erstrecken.

16. Vorrichtung nach einem der Ansprüche 12 bis 15, dadurch gekennzeichnet, daß der Konditionierbehälter (2) derart angeordnet ist, daß die Zylinderachse (20) horizontal ausgerichtet ist.

17. Vorrichtung nach einem der Ansprüche 12 bis 16, dadurch gekennzeichnet, daß sich die Zuführöffnung (28) im Bereich der Zylinderachse (20) befindet und daß im Inneren des Konditionierbehälters (2) an der Zuführöffnung (28) ein Führungsblech (12) angeordnet ist.

18. Vorrichtung nach einem der Ansprüche 12 bis 17, dadurch gekennzeichnet, daß die Auslaßöffnung (24) eine Auslaßschleuse (18) aufweist.

19. Vorrichtung nach einem der Ansprüche 12 bis 18, dadurch gekennzeichnet, daß der Auslaßöffnung (24) eine Dichtemeßeinrichtung (22) nachgeordnet ist, die zusammen mit einem Drehzahlgeber (26) oder einem Stromsensor des Antriebsmotors (13) der rotierenden Scheibe (5) an die Steuer- und Regeleinrichtung (15) angeschlossen ist, welche in Abhängigkeit der ermittelten Dichtewerte des konditionierten Kunststoffmaterials und in Abhängigkeit der Drehzahl bzw. des Stromes des Antriebsmotors (13) die Schleusenantriebe (19, 27) der Auslaßschleuse (18) und der Einlaßschleuse (10) ansteuert.

20. Vorrichtung nach einem der Ansprüche 12 bis 19, dadurch gekennzeichnet, daß an der Außenwand des Konditionierbehälters (2) mindestens ein Temperaturfühler (16) angeordnet ist, der an die Steuer- und Regeleinrichtung (15) angeschlossen ist.

## Claims

1. Process for conditioning, in particular for increasing the bulk density, of reusable plastic material, in particular of expanded polystyrene, in which the material is initially ground to a particle size suitable for the later end product, characterised in that the ground plastic particles are subjected to a mechanical and thermal rounding treatment like a type of mixing process, wherein the plastic particles are influenced by a temperature increase produced by friction and by repeated contact with heated surfaces.

2. Process according to claim 1, characterised in that the repeated contact of the plastic particles takes place with surfaces which have a temperature which lies below the melting temperature of the plastic particles.

3. Process according to claim 2, characterised in that the plastic particles contact surfaces, the temperatures of which lie at least in the range of the softening temperature, but at least about 30°C below the melting temperature.

4. Process according to one of claims 1 to 3 for conditioning polystyrene material, characterised in that the polystyrene particles contact surfaces having temperatures of 70 to 130°C, preferably 90 to 110°C.

5. Process according to one of claims 1 to 4, characterised in that the plastic particles additionally have contact with a surface, the temperature of which lies in the range from 40 - 60°C during the rounding treatment.

6. Process according to one of claims 1 to 5, characterised in that the plastic particles are rotated during the rounding process.

7. Process according to one of claims 1 to 6, characterised in that the speed of the particles and the temperature of the surface are selected such that adhesion of the plastic particles to the heated surface is avoided.

8. Process according to one of claims 1 to 7, characterised in that the rounding treatment is carried out under continuous supply of unconditioned material and continuous removal of conditioned material.

9. Process according to one of claims 1 to 7, characterised in that a preset quantity of unconditioned material is placed in a conditioning container, in that the rounding treatment of the plastic particles is carried out, and in that the conditioned material is subsequently removed.

10. Process according to one of claims 1 to 9, characterised in that the conditioned plastic particles are subjected to a continuous or discontinuous bulk density measurement.

11. Process according to claim 10, characterised in that the conditioning parameters are controlled as a function of the bulk density determined and/or load of the drive motor of the conditioning device.

12. Device for conditioning reusable, ground plastic material, in particular expanded polystyrene, having a cylindrical, sealed conditioning container (2) having a supply opening (28) and a discharge opening (24) which has fixed and moving parts in its interior, wherein the moving parts (7, 8) are designed and arranged such that the plastic material contacts at least the fixed parts (6) and the cylindrical conditioning container wall (3) on the way to the discharge opening, characterised in that the conditioning container (2) is provided with a temperature-control device (17).

13. Device according to claim 12, characterised in that the fixed and the moving parts are bolts (6, 7, 8) arranged parallel to the cylindrical axis (20), wherein the moving bolts (7, 8) are arranged on a rotating disc (5) and the fixed bolts (6) on the side wall (4b) of the conditioning container (2) opposite the disc (5).

14. Device according to claims 12 or 13, characterised in that at least one fixed and at least one moving bolt ring are provided.

15. Device according to one of claims 12 to 14, characterised in that the bolts (6, 7, 8) extend over at least half the length of the conditioning container (2).

16. Device according to one of claims 12 to 15, characterised in that the conditioning container (2) is arranged such that the cylinder axis (20) is horizontally aligned.

17. Device according to one of claims 12 to 16, characterised in that the supply opening (28) is situated in the region of the cylinder axis (20), and in that a guide plate (12) is arranged at the supply opening (28) in the interior of the conditioning container (2).

18. Device according to one of claims 12 to 17, characterised in that the discharge opening (24) has a discharge sluice (18).

19. Device according to one of claims 12 to 18, characterised in that a density measuring device (22), which is connected to the control and regulating device (15) together with a speed indicator (26) or a current sensor for the drive motor (13) of the rotating disc (5), is arranged downstream of the discharge opening (24), which control and regulating device (15) controls the sluice drives (19, 27) of the discharge sluice (18) and the inlet sluice (10) as a function of the density values of the conditioned plastic material determined and as a function of the speed or of the current of the drive motor (13).

20. Device according to one of claims 12 to 19, characterised in that at least one temperature sensor (16), which is connected to the control and regulating device (15), is arranged on the outer wall of the conditioning container (2).

## Revendications

1. Procédé pour le conditionnement, en particulier pour augmenter la masse volumique apparente de matières synthétiques recyclables, en particulier de polystyrène expansible, dans lequel la matière est d'abord broyée pour obtenir une granulométrie appropriée pour le produit final ultérieur, caractérisé en ce que
les particules de matières synthétiques broyées sont soumises à un traitement d'arrondissage par voie mécanique-thermique à la manière d'un procédé d'agitation, dans lequel les particules de matières synthétiques sont soumises à l'influence d'une élévation de température provoquée par frottement et par contact répété avec des surfaces chauffées.

2. Procédé selon la revendication 1, caractérisé en ce que le contact répété des particules de matières synthétiques a lieu avec des surfaces qui présentent une température qui est inférieure à la température de fusion des particules de matières synthétiques.

3. Procédé selon la revendication 2, caractérisé en ce que les particules de matières synthétiques viennent se mettre en contact avec des surfaces dont les températures se situent au moins dans le domaine de la température de ramollissement, mais qui sont inférieures à la température de fusion à concurrence d'au moins environ 30°C.

4. Procédé selon l'une quelconque des revendications 1 à 3, pour le conditionnement d'une matière de polystyrène, caractérisé en ce que les particules de polystyrène sont mises en contact avec des surfaces dont les températures s'élèvent de 70 à 130°C, de préférence de 90 à 110°C.

5. Procédé selon l'une quelconque des revendications 1 à 4, caractérisé en ce que les particules de matières synthétiques, au cours du traitement d'arrondissage, sont mises en outre en contact avec une surface dont la température se situe dans le domaine de 40 à 60°C.

6. Procédé selon l'une quelconque des revendications 1 à 5, caractérisé en ce que les particules de matières synthétiques se déplacent en rotation au cours du traitement d'arrondissage.

7. Procédé selon l'une quelconque des revendications 1 à 6, caractérisé en ce que la vitesse des particules et la température de la surface sont sélectionnées de telle sorte que l'on évite une adhérence des particules de matières synthétiques à la surface réchauffée.

8. Procédé selon l'une quelconque des revendications 1 à 7, caractérisé en ce qu'on effectue le traitement d'arrondissage en alimentant en continu de la matière non conditionnée et en prélevant en continu de la matière conditionnée.

9. Procédé selon l'une quelconque des revendications 1 à 7, caractérisé en ce qu'on remplit un récipient de conditionnement avec une quantité prédéfinie de matière non conditionnée,
en ce qu'on effectue le traitement d'arrondissage des particules de matières synthétiques et
en ce qu'on prélève ensuite la matière conditionnée.

10. Procédé selon l'une quelconque des revendications 1 à 9, caractérisé en ce qu'on soumet les particules de matières synthétiques conditionnées à une mesure en continu ou en discontinu de la masse volumique apparente.

11. Procédé selon la revendication 10, caractérisé en ce qu'on règle les paramètres de conditionnement en fonction de la masse volumique apparente déterminée et/ou de la charge du moteur d'entraînement du dispositif de conditionnement.

12. Dispositif pour le conditionnement d'une matière synthétique broyée recyclable, en particulier de polystyrène expansible, comprenant un récipient de conditionnement cylindrique fermé (2) comportant une ouverture d'alimentation (28) et une ouverture d'évacuation (24), qui présente, à l'intérieur, des éléments fixes et mobiles, les éléments mobiles (7, 8) étant réalisés et disposés de telle sorte que la matière synthétique, sur son chemin vers l'ouverture d'évacuation, vient se mettre en contact au moins avec les éléments fixes (6), ainsi qu'avec la paroi cylindrique (3) du récipient de conditionnement, caractérisé en ce que le récipient de conditionnement (2) est muni d'un mécanisme de traitement thermique (17).

13. Dispositif selon la revendication 12, caractérisé en ce que les parties fixes et les parties mobiles sont des goujons (6, 7, 8) disposés parallèlement à l'axe (20) du cylindre, dans lequel
les goujons mobiles (7, 8) sont disposés sur un disque rotatif (5) et les goujons fixes (6) sont disposés sur la paroi latérale (4b) du récipient de conditionnement (2) opposée au disque (5).

14. Dispositif selon la revendication 12 ou 13, caractérisé en ce qu'on prévoit au moins une couronne de goujons fixes et au moins une couronne de goujons mobiles.

15. Dispositif selon l'une quelconque des revendications 12 à 14, caractérisé en ce que les goujons (6, 7, 8) s'étendent sur au moins la moitié de la longueur du récipient de conditionnement (2).

16. Dispositif selon l'une quelconque des revendications 12 à 15, caractérisé en ce que le récipient de conditionnement (2) est disposé de telle sorte que l'axe (20) du cylindre s'étend en direction horizontale.

17. Dispositif selon l'une quelconque des revendications 12 à 16, caractérisé en ce que l'ouverture d'alimentation (28) se trouve dans la zone de l'axe (20) du cylindre et en ce que, à l'intérieur du récipient de conditionnement (2), une chicane (12) est disposée contre l'ouverture d'alimentation (28).

18. Dispositif selon l'une quelconque des revendications 12 à 17, caractérisé en ce que l'ouverture d'évacuation (24) présente un sas d'évacuation (18).

19. Dispositif selon l'une quelconque des revendications 12 à 18, caractérisé en ce qu'un mécanisme de mesure (22) de la masse volumique est monté à la suite de l'ouverture d'évacuation (24), qui est raccordé, conjointement avec un transmetteur de vitesse (26) ou un détecteur de courant du moteur d'entraînement (13) du disque rotatif (5), au mécanisme de commande et de réglage (15) qui excite, en fonction des valeurs de masse volumique déterminées de la matière synthétique conditionnée et en fonction de la vitesse de rotation, respectivement du courant du moteur d'entraînement (13), les commandes (19, 27) du sas d'évacuation (18) et du sas d'entrée (10).

20. Dispositif selon l'une quelconque des revendications 12 à 19, caractérisé en ce qu'au moins un palpeur de température (16) est disposé contre la paroi externe du récipient de conditionnement (2), qui est raccordé au mécanisme de commande et de réglage (15).
